# NEUE EUROPÄISCHE PATENTSCHRIFT

(11) **EP 0 845 198 B2**
(45) Veröffentlichungstag und Bekanntmachung des Hinweises auf die Entscheidung über den Einspruch: **24.02.2010**
(45) Hinweis auf die Patenterteilung: 02.05.2002
(21) Anmeldenummer: 97114247.6
(22) Anmeldetag: 18.08.1997
(51) Int. Cl.: A01D 41/12, A01B 79/00

(54) **Landwirtschaftliches Nutzfahrzeug verstellbar angeordneten Bearbeitungsgerät**
Agricultural vehicle with an adjustable working implement
Véhicule agricole comportant un outil de travail réglable

(30) Priorität: 16.11.1996 DE 19647523
(43) Veröffentlichungstag der Anmeldung: 03.06.1998
(73) Patentinhaber: CLAAS KGaA, 33428 Harsewinkel (DE)
(72) Erfinder: Diekhans, Norbert, Dr., 33335 Gütersloh (DE)

(56) Entgegenhaltungen:
- EP-A- 0 331 893
- EP-A- 0 660 660
- WO-A-95/16228
- DE-A- 19 544 112
- DE-C- 4 431 824
- US-A- 5 177 489
- US-A- 5 438 771
- US-A- 5 473 870

## Beschreibung

Die Erfindung bezieht sich auf ein landwirtschaftliches Nutzfahrzeug nach dem Oberbegriff des Anspruchs 1.

Landwirtschaftliche Nutzfahrzeuge wie Erntemaschinen, Traktoren etc. sind in der Regel mit einem Bearbeitungsgerät ausgestattet, das in seiner räumlichen Lage und Ausrichtung beweglich und/oder verstellbar ist. Solche Bearbeitungsgeräte sind z.B. das Schneidwerk einer Erntemaschine, der Pflug an einem Traktor und Geräte zum Ausbringen von Dünge- oder Pflanzenschutzmitteln. Die Lage und Ausrichtung des Bearbeitungsgerätes zum Fahrzeug werden dabei durch manuelle Steuerung durch den Fahrzeugführer oder durch automatische Regelung anhand von Sensoren zur Lage und Ausrichtungsbestimmung beeinflußt.

Es sind weiterhin landwirtschaftliche Nutzfahrzeuge bekannt, bei denen, neben der Lage und Ausrichtung des Bearbeitungsgeräts relativ zum Fahrzeug, auch die Lage und Ausrichtung des Bearbeitungsgeräts gegenüber dem Erdboden veränderlich ist. So ist bei einem Mähdrescher eine Vorrichtung und ein Verfahren bekannt nach dem die Schnitthöhe, also die Höhe des Mähbalkens über dem Erdboden, eingestellt und geregelt werden kann. Bei der Steuerung und Regelung der Lage und Ausrichtung des Bearbeitungsgerätes sind häufig Soll- und Grenzwerte für die Parameter, die die Lage und Ausrichtung beschreiben, gegeben. So sind Sollwerte für die Schnitthöhe eines Mähdreschers in Abhängigkeit von dem Erntegut bekannt. Ein unterer Grenzwert für die Schnitthöhe ist gegeben, um eine Beschädigung des Mähwerks zu verhindern. Ein oberer Grenzwert ist durch die Wuchshöhe des Ernteguts gegeben.

Die Lage und Ausrichtung des Bearbeitungsgerätes gegenüber dem Fahrzeug und gegenüber dem Erdboden sind voneinander abhängig. Die Abhängigkeit ist durch die Beschaffenheit des Erdbodens bestimmt und ist daher im allgemeinen nur unzureichend bekannt. Für die Funktion des landwirtschaftlichen Nutzfahrzeuges ist aber die Lage und Ausrichtung des Bearbeitungsgeräts gegenüber dem Erdboden maßgeblich. Es sind daher Verfahren bekannt, die Lage und Ausrichtung des Bearbeitungsgerätes gegenüber dem Erdboden zu messen und durch Verstellen der Lage und Ausrichtung zum Fahrzeug zu regeln. Dies ist für den Betrieb eines Mähdreschers z.B. durch das AUTO-CONTOUR-Verfahren der Anmelderin gegeben. In vielen Fällen wird jedoch der Fahrzeugführer durch manuelle Steuerung die veränderte Bodenbeschaffenheit ausgleichen.

Weiterhin ist aus der DE 44 31 824 C1 ein Verfahren bekannt, daß Betriebsdaten eines Mähdreschers mit den jeweiligen Ortskoordinaten verknüpft, in einem historischen Datenkataster erfaßt und daraus Soll- oder Grenzbetriebsdaten für eine erneute Bearbeitung des Feldes vorgibt. Die Ortskoordinaten werden nach dem Stand der Technik mithilfe eines Satellitennavigationssystems an dem Fahrzeug bestimmt.

Weiterhin ist aus der DE 195 44 112.5 ein Verfahren zur Generierung dreidimensionaler digitaler Geländemodelle mit einem Fahrzeug, das ein Satellitennavigationssystem aufweist, bekannt. Für die Generierung digitaler Geländemodelle und die Erzeugung von Datenkatastern wird in den genannten Verfahren die Position eines Punktes an dem Fahrzeug zugrundegelegt. Für den Betrieb des Nutzfahrzeuges ist jedoch die Position und die Ausrichtung des Bearbeitungsgerätes entscheidend Die Genauigkeit der erzeugten Geländemodelle ist daher nicht besser als es die Abmessungen des Nutzfahrzeuges zulassen. Dies kann insbesondere bei großen Maschinen mit weit ausladenden Bearbeitungsgeräten zu Ungenauigkeiten im Geländemodell bzw. im Datenkataster führen. Die hohe Genauigkeit der heute verfügbaren Satellitennavigationssysteme wird in diesen Verfahren nicht voll genutzt. Soll außerdem das Betriebsdatenkataster zur Regelung der Lage und Ausrichtung des Bearbeitungsgeräts genutzt werden, so macht die Unsicherheit in der Position des Bearbeitungsgerätes die Kontrolle und eventuell das Eingreifen des Fahrzeugführers notwendig. Da die genannten Unsicherheiten vor allem bei unebenem Gelände zum Tragen kommen, in dem die Konzentration des Fahrzeugführers ohnehin stärker gefordert ist, kann dies dazu führen, daß die Leistungsfähigkeit des landwirtschaftlichen Nutzfahrzeuges nicht voll genutzt wird, oder sogar Betriebsstörungen hervorgerufen werden.

Es ist daher die Aufgabe der Erfindung, eine Optimierung des Betriebes eines landwirtschaftlichen Nutzfahrzeuges zu ermöglichen, indem für ein in seiner Lage und Ausrichtung gegenüber dem Fahrzeug bewegliches Bearbeitungsgerät eine absolute Position eines Referenzpunktes des Bearbeitungsgerätes feststellbar ist.

Die Aufgabe wird erfindungsgemäß durch die kennzeichnenden Merkmale des Patentansspruches 1 gelöst. Die Bestimmung der absoluten Position erfolgt durch einen an sich bekannten Rechenalgorithmus, der die Sendedaten von GPS-Satelliten verarbeitet. Um eine ausreichende Genauigkeit für die Bestimmung der absoluten Position zu erzielen, kann sich der Fachmann weiterer aus dem Stand der Technik bekannter Mittel bedienen, um die Fehlerquote der GPS-Positionsdaten zu verringern. Hier bieten sich beispielsweise zusätzliche Fahrzeugsensoren an, die Gierwinkel, Raddrehzahlen oder die Geschwindigkeit über Grund messen, oder die Auswertung von Referenzsignalen, die von anderen Funkstationen ausgesendet werden, an. Die sich daran anschließenden Unteransprüche enthalten vorteilhafte und förderliche Ausgestaltungen der Erfindung. Die erfindungsgemäße Vorrichtung erlaubt es, das Bearbeitungsgerät anhand der ermittelten Werte aktuell ausschließlich anhand der ermittelten Positionsdaten, in Verknüpfung mit einem historischen Datenkataster und/oder weiteren maschinenseitigen Sensoren zu steuern oder die ermittelten Positionsdaten in einem historischen Datenkataster abzulegen, um spätere Bearbeitungen mit dem gleichen oder anderen landwirtschaftlichen Nutzfahrzeugen mit steuerbaren Bearbeitungsgeräten auf Basis des historischen Datenkatasters zu steuern.

Erfindungsgemäß weist das landwirtschaftliche Nutzfahrzeug eine Auswerteeinheit auf, die aus den Daten der Satellitennavigations-Empfangseinheit (GPS) die absolute Position (Pb1, Pb2, ...) mindestens eines Referenzpunktes (b1, b2, ...) an dem Bearbeitungsgerät (B) im terrestrischen Bezugssystem (xyz) bestimmt. Dies erlaubt in den bekannten Verfahren zur Erstellung von Betriebsdatenkatastern und Geländemodellen, die Position des Fahrzeugs durch die genaue Position des Referenzpunktes an dem Bearbeitungsgerät zu ersetzen und so eine höhere Präzision der genannten Verfahren für ein landwirtschaftliches Nutzfahrzeug mit einem in seiner Lage und Ausrichtung verstellbaren Bearbeitungsgerät zu erreichen. Ist die Satellitennavigations-Empfangseinheit an anderer Stelle eines landwirtschaftlichen Nutzfahrzeugs positioniert als sich die Referenzpunkte (b1, b2, ...) befinden, muß der Rechenalgorithmus einen der anderen Position der Bezugspunkte (b1, b2, ...) entsprechende Koordinatentransformation berücksichtigen.

In einer vorteilhaften Ausgestaltung der Erfindung wird eine Folge von Positionen mindestens eines Punktes an dem Bearbeitungsgerät, die während der Fahrt des landwirtschaftlichen Nutzfahrzeuges über den Schlag aufgenommen wird, als Grundlage für die Erstellung eines präzisen Geländemodells benutzt. Bei erneuter Benutzung des landwirtschaftlichen Nutzfahrzeuges auf demselben Schlag kann auf die im historischen Datenkataster gespeicherten Betriebsdaten zurückgegriffen werden. Die gespeicherten Betriebsdaten werden dann anteilig oder vollständig die Regelung der Lage und Ausrichtung des Bearbeitungsgeräts bestimmen. Auf diese Art wird der Betrieb des landwirtschaftlichen Nutzfahrzeugs optimiert und zugleich der Fahrer entlastet.

Eine vorteilhafte Ausgestaltung des Erfindung sieht vor, daß für den Betrieb des Bearbeitungsgeräts charakteristische Bezugslinien ermittelt werden. Diese dienen dazu, das Geländeprofil zu verfeinern, indem das Gefalle bzw. die Steigung des Geländes in Fahrtrichtung und/oder die Neigung des Geländes quer zur Fahrtrichtung aus der Orientierung der besagten Bezugslinien bestimmt wird. Erfindungsgemäß wird eine solche Bezugslinie (L1) gegeben durch die absolute Position (Pb1) des Referenzpunktes (b1) und einen weiteren Punkt oder einen Vektor. Eine vorteilhafte Ausgestaltung der Erfindung sieht vor, den Geschwindigkeitsvektor (vb1) des Referenzpunktes (b1) zur Festlegung der Bezugslinie (L1) zu benutzen. Der Geschwindigkeitsvektor kann dabei entweder direkt den GPS-Daten oder einem separaten Geschwindigkeitssensor mit Richtungssensor entnommen sein oder aus zwei zeitlich aufeinanderfolgenden Positionen des Referenzpunktes (b1) bestimmt werden. Im Falle eines gleichbleibenden Bodenabstandes (d1) des Referenzpuktes (b1) gibt der Winkel der Bezugslinie (L1) mit der Horizontalebene (xy) das Gefälle bzw. die Steigung des Erdbodens in Fahrtrichtung. Die Bezugslinie (L1) kann auch die Bewegungsrichtung eines oder mehrerer Referenzpunkte des Bearbeitungswerkzeuges, vorzugsweise dessen Begrenzungspunkte, im Gelände darstellen. Dazu wird die Auswerteeinheit (AWE) mit einer geeigneten Software entweder bei deckungsgleichem Referenzpunkt und Begrenzungspunkt aus der gegenwärtigen Position des Referenzpunktes und weiteren Sensordaten wie beipielsweise Radeinschlagswinkel, Geschwindigkeit und Gierwinkel, der vorzugsweise mittels eines Trägheitssensors, eines Glasfaserkreisels oder eines Piezogyro ermittelbar ist,, den Bewegungsvektor als Bezugslinie (L1) errechnen oder, bei auseinanderliegendem Referenz- und zu berechnendem Begrenzungspunkt, zusätzlich aus den Abstandsdaten des Referenzpunktes zum Begrenzungspunkt anhand der Geometriebedingungen die Positionsdaten des Begrenzungspunktes aus denen des Referenzpunktes ableiten und dann den Bewegungsvektor als Bezugslinie (L1) errechnen. Je nach Plotrate und Geschwindigkeit des landwirtschaftlichen Nutzfahrzeugs kann der Bewegungsvektor von Begrenzungspunkten auch ausschließlich unter Verrechnung der Positionsdaten ermittelt werden, beispielsweise, wenn jeweils eine Position des Nutzfahrzeugs in Abständen von weniger als 20 m zurückgelegter Fahrtstrecke ermittelbar ist oder die Zuhilfenahme und Verrechnung weiterer Sensordaten erfolgt erst, wenn die Plotrate über den genannten Anstand hinausgeht. Die Wahl des Mindestabstandes ist natürlich vom Maß der gewünschten Genauigkeit der Bewegungsvektoren und den Anforderungen der jeweils vorgenommenen landwirtschafltichen Arbeiten in sachlicher und ökonomischer Hinsicht abhängig. Die Bezugslinie (L1) kann auch als Lenksignal in einer Regelelektronik einer automatischen Lenkeinrichtung weiterverarbeitet werden. Als Richtungsvektor kann die Bezugslinie (L1) beispielsweise von einem Begrenzungspunkt oder Referenzpunkt aus an einer Soll-Fahrspur oder Bearbeitungskante entlang gezogen werden. Die Regelelektronik der automatischen Lenkeinrichtung vergleicht dann die Ist-Positionswerte des Begrenzungs- oder Referenzpunktes mit den Soll-Positionswerten entlang der Bezugslinie (L1) und gibt bei einer festgestellten Abweichung ein Stellsignal an die Lenkvorrichtung, das geeignet ist, bei weiterer Vorfahrt die Differenz zwischen Soll- und Istpositionswerten entlang der Bezugslinie (L1) zu verringern.

Eine weitere vorteilhafte Ausgestaltung der Erfindung sieht vor, eine weitere für den Einsatzzweck des Bearbeitungsgeräts typische Bezugslinie (L2) quer zu der bevorzugten Fahrtrichtung zu bestimmen. Erfindungsgemäß wird die Bezugslinie durch den Referenzpunkt (b1) und einen weiteren Punkt oder Vektor bestimmt. Die Erfindung sieht vor, einen zweiten Referenzpunkt (b2) zur Bestimmung der Bezugslinie zu verwenden. Bei gleichem Bodenabstand der Referenzpunkte gibt der Winkel der Bezugslinie (L2) mit der Horizontalebene (xy) das Quergefälle des Erdbodens an.

Erfindungsgemäß soll die Höhe über dem Erdboden von Punkten auf der Bezugslinie bekannt oder bestimmbar sein. Bekannt ist die Höhe z.B. dann, wenn der Bodenabstand durch ein ungefedertes Fahrwerk oder durch einen bekannten Regelkreis (z.B. mittels Bodendrucksensoren) festgelegt wird. Darüberhinaus sind Mittel oder Sensoren bekannt, die Höhe von Bearbeitungsgeräten über dem Erdboden zu bestimmen. Solche Mittel sind z.B. mechanische Abstandmesser oder Echolote. Eine vorteilhafte Ausgestaltung der Erfindung sieht vor, solche Mittel zur Bestimmung des Bodenabstands für mindestens zwei Punkte der Bezugslinie (L2) vorzusehen. Solche Mittel erlauben es auch, bei einer Verkippung des Bearbeitungsgerätes gegenüber dem Erdboden, eine genaue Bestimmung der Querneigung des Erdbodens durchzuführen.

Eine weitere vorteilhafte Ausgestaltung der Erfindung beinhaltet ein Datenkataster, in dem bei Positionsänderungen des Bearbeitungsgerätes das Gefälle bzw. die Steigung und das Quergefälle mit der Position (Pb1, Pb2, ...) mindestens eines der Referenzpunkte (b1, b2,...) verknüpft abgespeichert wird. Auf diese Art erhält man ein verfeinertes Geländemodell, welches die Einstellung der Betriepsparameter des Nutzfahrzeuges bei einer erneuten Bearbeitung des Schlages erleichtert.

Die Erfindung ist hier anhand von landwirtschaftlichen Nutzfahrzeugen beschrieben.

Anhand der beigefügten Zeichnungen wird das erfindungsgemäße landwirtschaftliche Nutzfahrzeug mit einem in seiner Lage und Ausrichtung verstellbaren Bearbeitungsgerät am Beispiel einer Erntemaschine mit vorgesetztem Schneidwerk nachfolgend näher beschrieben. Es zeigen:
- Figur 1: eine Ansicht einer Erntemaschine von der Seite,
- Figur 2: eine Ansicht einer Erntemaschine von vorne,
- Figur 3: eine Ansicht einer Erntemaschine von oben,
- Figur 4: ein Blockschaltbild einer Auswerteeinheit,
- Figur 5: ein Blockschaltbild einer weiteren Auswerteeinheit,
- Figur 6: ein Blockschaltbild einer weiteren Auswerteeinheit,
- Figur 7: eine Erntemaschine auf dem Feld.

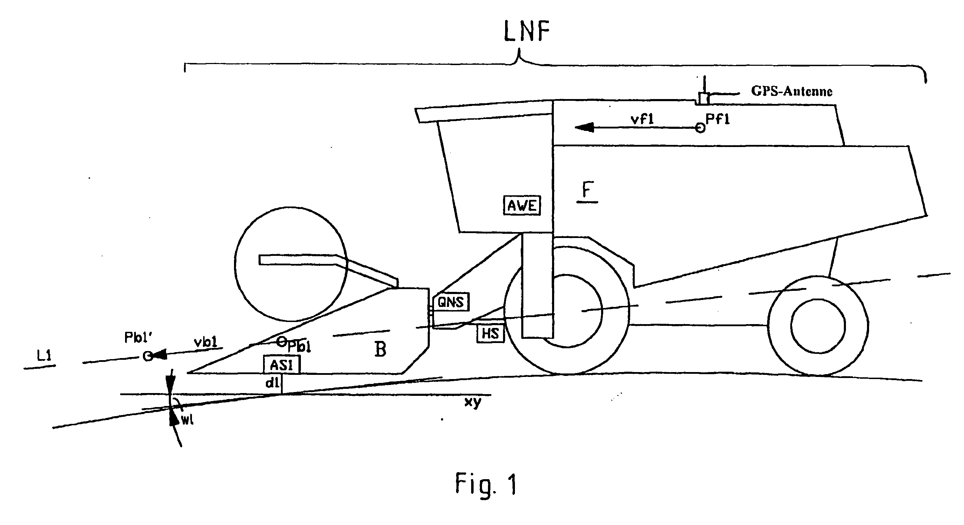

Fig. 1 zeigt eine Ansicht der Erntemaschine als ein Beispiel für ein landwirtschaftliches Nutzfahrzeug (LNF) von der Seite. Die Längsachse des Fahrzeugs und die des Bearbeitungsgeräts haben in diesem Falle die gleiche Ausrichtung, aber das Mähwerk (B) ist gegenüber dem Fahrzeug (F) in der Höhe verstellbar. Die Horizontalebene des terrestrischen Koordinatensystems ist durch die Linie(xy) angedeutet. Demgegenüber ist der Erdboden unterhalb des Referenzpunktes (b1) am Bearbeitungsgeräts um einen Steigungswinkel (W1) geneigt. Dieser kann von der Steigung des Erdbodens unterhalb des Fahrzeuges durchaus verschieden sein. Dies führt dazu, daß der Geschwindigkeitsvektor (vf1) eines Referenzpunktes (Pf1) am Fahrzeug selbst bei unveränderter Einstellung der Höhe eine andere Ausrichtung haben kann als der Geschwindigkeitsvektor (vb1) des Referenzpunktes (b1) am Bearbeitungsgerät. Ist der Abstand (d) des Referenzpunktes (b1) zum Erdboden bei Positionsveränderungen (Pb1, Pb1') gleichbleibend, so entspricht der Winkel zwischen dem Geschwindigkeitsvektor (vb1) und der Horizontalebene(xy) dem Steigungswinkel (W1) des Erdbodens unterhalb des Referenzpunktes (b1). Die Bezugslinie (L1) ist hier gegeben durch die absolute Position (Pb1) des Referenzpunktes (b1) und den Geschwindigkeitsvektor (vb1), der wiederum durch den Referenzpunkt (Pb1') festgelegt ist Die Werte der Bezugslinie (L1) können dann als Steuerbasis zur Steuerung des Bearbeitungsgerätes (B) oder als Kenngröße für die Bodenkontur zur Ablage im historischen Datenkataster genutzt werden.

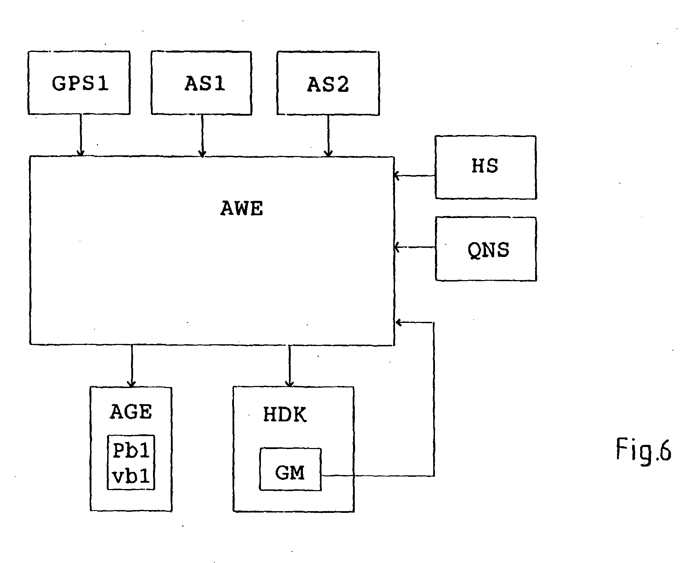

Es sind schematisch ein Höhensensor (HS) und ein Querneigungssensor (QNS) eingezeichet. Mit diesen Senoren läßt sich die relative Höhenlage und Querneigung des Bearbeitungsgerätes (B) zum Fahrzeug (F), an dem es montiert ist, bestimmen. Ebenfalls nur schematisch angedeutet ist ein Bodenabstandssensor (AS1), mit dem der Abstand des Referenzpunktes vom Boden bestimmt werden kann. Auf dem Dach des Mähdreschers (F) ist dem Punkt (Pf1) zugeordnet schematisch eine GPS-Antenne gezeigt. Über die Auswerteeinheit (AWE) wird die über Satellitennavigation ermittelte absolute Position des Punktes (Pf1) auf Referenzpunkte (Pb1,..) am Bearbeitungsgerät (B) transformiert, näheres ergibt sich aus den Erläuterungen zu Fig. 6.

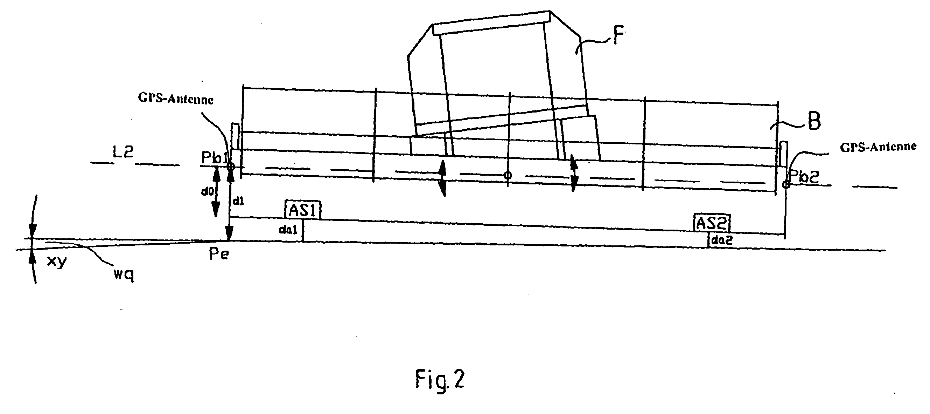

Fig.2 zeigt eine Ansicht der Erntemaschine von vorne. In dieser Ansicht ist eine Verkippung des Bearbeitungsgeräts gegenüber der Erntemaschine und gegenüber dem Erdboden dargestellt und die zugehörigen Parameter erklärt. Die Horizontalebene des terrestrischen Koordinatensystems ist wiederum durch die Linie (xy) angedeutet. Demgegenüber ist der Erdboden unterhalb des Bearbeitungsgeräts im Mittel um einen Winkel (Wq) geneigt. Diese Neigung kann von der Neigung des Erdbodens unterhalb des Fahrzeuges durchaus verschieden sein, was hier durch eine Kippung des Fahrzeugs in die andere Richtung angedeutet ist. Die Referenzlinie (L2) ergibt sich als Verbindungslinie der zwei Referenzpunkte (b1, b2) am Bearbeitungsgerät. Die Abstandssensoren (AS1, AS2) bestimmen den Abstand (da1, da2) zweier Punkte des Bearbeitungsgeräts (a1, a2) vom Erdboden. Aus den Geometriebedingungen lassen sich hieraus die Abstände (d1, d2) der Referenzpunkte (b1, b2) vom Erdboden berechnen. Der Abstand der Referenzpunkte vom Erdboden ist im Idealfall mit der Summe des minimalen Abstands (d0) der Referenzpunkte (b1, b2) vom Erdboden, also dem Abstand der Referenzpunkte bei auf dem Boden aufliegendem Mähbalken, und der voreingestellten Bodenabstands- beziehungsweise Schnitthöhe (da(x)) identisch. Bei gleichen Abständen (d1,d2) der Referenzpunkte (b1, b2) gibt der Winkel der Bezugslinie (L2) mit der Horizontalebene (xy) direkt den mittleren Neigungswinkel (Wq) des Erdbodens unter dem Bearbeitungsgerät an. In dieser Ausführunsform der Erfindung befindet jeweils an den Referenzpunkten (b1,b2) eine GPS-Antenne. Bei einer Differenz der Abstände (d1, d2) kann aus den Geometriebedingungen der mittlere Neigungswinkel (Wq) errechnet werden

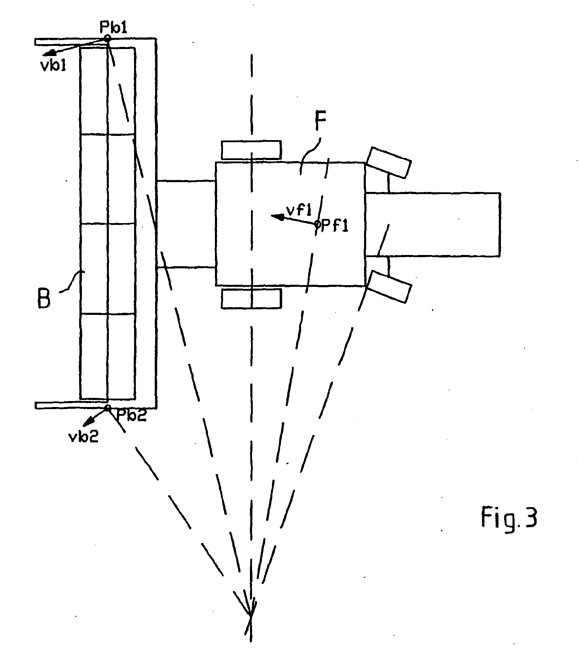

Fig. 3 zeigt eine Ansicht der Erntemaschine von oben. Die Abbildung macht auch deutlich, daß eine Referenzlinie (L1), die aus dem Geschwindigkeitsvektor (vb1) und dem Referenzpunkt (b1) bestimmt wird, nicht unbedingt parallel zur Längsachse des Fahrzeugs bzw. des Bearbeitungsgeräts ausgerichtet ist.

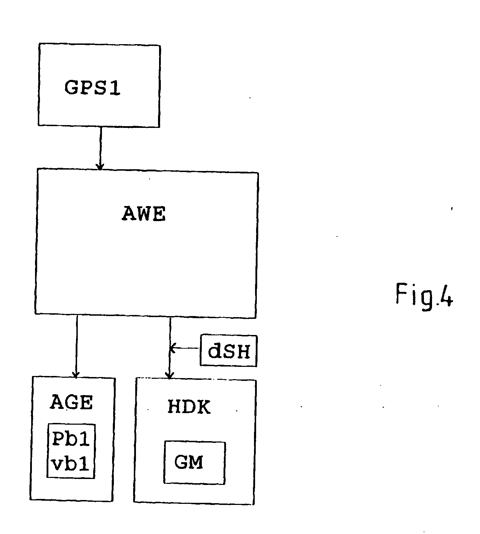

Fig. 4 zeigt ein Blockschaltbild der einfachsten Version der erfindungsgemäßen Auswerteeinheit (AWE). Es wird hierbei vorausgesetzt, daß der Empfänger (Antenne) einer GPS-Satellitennavigations-Empfangseinheit (GPS1) direkt an einem Referenzpunkt (b1) des Bearbeitungsgerätes (B) montiert ist. In diesem Falle ist die Funktion der Auswerteeinheit (AWE) darauf beschränkt, die Daten des GPS-Empfängers so aufzuarbeiten, daß die absolute Position (Pb1) und optional die absolute Geschwindigkeit (vb1) des Referenzpunktes (b1) an einer Ausgabeeinheit (AGE) angezeigt, in einem Höhendatenkataster (HDK) gespeichert werden und/oder einer Steuereinrichtung (nicht dargestellt) für die Höhe/Querneigung des Schneidwerkes (B) zugeführt werden.. Zur Erzeugung und Abspeicherung eines Geländemodells (GM) im Datenkataster genügt es in diesem einfachsten Fall, den Abstand (d1) des Punktes (b1) vom Erdboden aus dem Abstand (d0) und der voreingestellten Schnitthöhe (dSH) durch Addition zu berechnen und von der Höhenkoordinate der Position (Pb1) abzuziehen. Die Größe von (d0) hängt davon ab, wo der Referenzpunkt am Schneidwerk (B) angeordnet ist; (d0) kann auch nahezu der Wert Null haben.

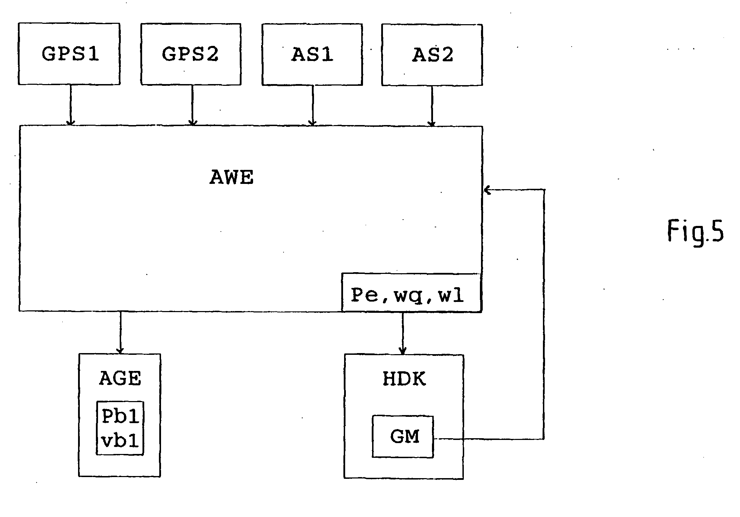

Fig. 5 zeigt ein Blockschaltbild einer vorteilhaften Ausgestaltung der erfindungsgemäßen Auswerteeinheit. Hier werden die Funktionen der in Fig. 4 dargestellten Version der Auswerteeinheit ergänzt. Die Auswerteeinheit ermittelt aus den Daten der GPS-Empfanger (GPS1, GPS2) die absoluten Positionen (Pb1, Pb2) zweier Referenzpunkte (b1, b2) und den Geschwindigkeitsvektor (vb1) eines Bezugspunkts (P1). Aus diesen Daten wird wiederum die Bezugslinie (L1) und/oder (L2) generiert. Zusätzlich messen zwei Abstandssensoren (AS1, AS2) die Abstände der Punkte (a1, a2) vom Erdboden. Aus den Geometriebedingungen interpoliert die Auswerteeinheit hieraus die Abstände (d1, d2) der Referenzpunkte (b1, b2) vom Erdboden und den Winkel (Wq), den der Erdboden zur Horizontalebene einnimmt. Ferner ermittelt die Auswerteeinheit aus der Neigung der Referenzlinie (L1) und zwei aufeinanderfolgenden Messungen des Bodenabstands (d1, d1') den Steigungswinkel (W1) des Erdbodens. Aus den Positionen der Punkte (b1, b2) wird so ein verfeinertes Geländemodell erzeugt, welches im Datenkataster abgespeichert für erneute Bearbeitung des Schlages mit einem landwirtschaftlichen Nutzfahrzeug zur Verfügung steht.

In Fig.6 ist ein Blockschaltbild einer weiteren vorteilhaften Ausgestaltung der Auswerteeinheit (AWE) gezeigt In diesem Fall befindet sich eine Satelliten-Empfangseinheit (GPS1) auf dem Fahrzeug (F)- vgl Fig.1 - und nicht an dem gegenüber dem Fahrzeug verstellbaren Schneidwerk (B). Die auf diese Weise ermittelte Position eines bestimmten Punktes an dem Fahrzeug (F) wird der Auswerteeinheit (AWE) zugeführt. Gleichzeitig wird der Auswerteeinheit (AWE) das Signal des Höhensensors (HS) zugeführt, das die relative Höhenlage des Schneidwerkes (B) zum Fahrzeug (F) angibt. Darüber hinaus ist es vorgesehen, der Auswerteeinheit (AWE) auch das Signal des Querneigungssensors (QNS) zuzuführen, das die relative Querneigung des Schneidwerkes (B) zum Fahrzeug (F) angibt. Aus diesen Daten ermittelt die Auswerteeinheit (AWE) die absolute Position von Referenzpunkten und/oder Linien am Bearbeitungsgerät (B) im terrestischen Bezugssystem. Mit Hilfe der an dem Bearbeitungsgerät (B) angeordneten Bodenabstandssensoren (AS1, AS2) wird der Bezug zum Erdbodenprofil hergestellt.

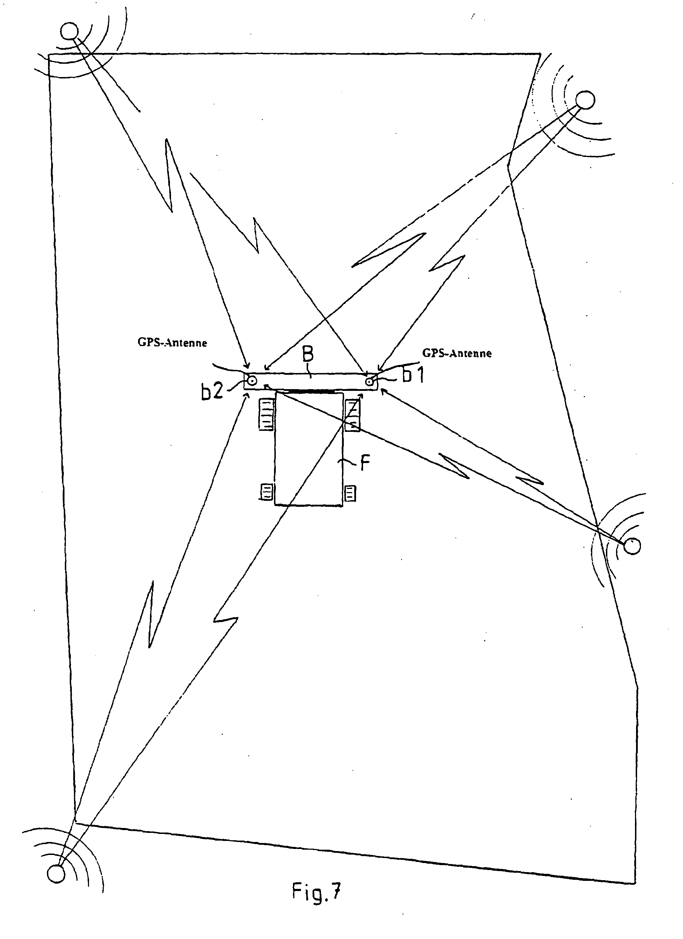

In Figur 7 ist schematisch ein Mähdrescher auf einem Feld dargestellt, der von 4 erdgebunden, ortsfesten Basisstationen Ortungssignale zur Positionsbestimmung der Referenzpunkte am Bearbeitungsgerät/Schneidwerk (b1, b2) empfängt. Die Basisstationen, deren Position im terrestischen Bezugssystem sehr genau vermessen ist, senden als sogenannte Pseudo-Satelliten GPS-Signale aus; in Äquivalenz zur Satellitennavigaton mit im Weltraum die Erde umkreisenden Satelliten. Die Signale solcher Pseudo-Satelliten können auch als Korrekturfaktor für ein hochgenau arbeitendes GPS-System genutzt werden. Der Mähdrescher gemäß dieser Ausführungsform weist zu beiden Seiten des Schneidwerkes je eine Satellitenempfangsantenne auf

Das Ausführungsbeispiel in den Figuren 1 bis 7 ist anhand eines Mähdreschers erläutert. Für den Fachmann ist es eine mit seinen fachnotorischen Kenntnissen leicht lösbare Aufgabe, die vorgeschlagene erfinderische Vorrichtung auf andere landwirtschaftliche Nutzfahrzeuge zu übertragen. So ist es beispielsweise denkbar, sich als landwirtschaftliches Nutzfahrzeug einen Traktor mit einem Pflug vorzustellen und als Referenzpunkte (b1, b2, ...), deren Arbeitshöhe ermittelt wird, Rahmenpunkte des Pfluges zu definieren. Anhand der erfindungsgemäßen Vorrichtung kann dann die Arbeitstiefe eines Pfluges mit gleichzeitiger oder alternativer Erstellung, Korrektur und/oder unter Zuhilfenahme eines schon vorhandenen historischen Datenkatasters gesteuert werden. Anstelle eines Pfluges sind natürlich auch alle sonstigen Kombinationen eines Traktors mit bekannten Bearbeitungsgeräten wie Drillmaschinen, Sämaschinen, Eggen, Grubbern, Gülleausbringungsgeräten, Pressen, Mähwerken, Wendern, Schwadern, bei denen jeweils geeignete Referenzpunkte (b1, b2, ...) gewählt werden, vorstellbar. In gleicher Weise läßt sich die erfindungsgemäße Vorrichtung auf anderen landwirtschaftlichen Nutzfahrzeugen wie beispielsweise Feldhäckslern, Zuckerrübenrodern, Kartoffellege- und Erntemaschinen anwenden. Um für verschiedene landwirtschaftliche Nutzfahrzeuge oder austauschbare Geräte, wie beispielsweise unterschiedliche Bearbeitungsgeräte an einem Traktor oder wechselnde Schneidwerke oder Maisgebisse an einem Mähdrescher, einsetzbar zu sein, sollte die Auswerteeinheit (AWE) zudem über eine Eingabemöglichkeit verfügen, über die die jeweils zu ermittelnden Referenzpunkte (b1, b2, ...) anpaßbar sind, soweit die Referenzpunkte nicht automatisch über einen Anbaugeräteschalter und/oder unter Zugriff auf einen Speicher festlegbar sind.

## Patentansprüche

1. Landwirtschaftliches Nutzfahrzeug (LNF) mit einem in seiner Lage und/oder Ausrichtung gegenüber dem Fahrzeug (F) verstellbar angeordneten Bearbeitungsgerät (B), wobei das Nutzfahrzeug eine Satellitennavigations-Empfangseinheit (GPS) aufweist,
**dadurch gekennzeichnet,**
**dass** das landwirtschaftliche Nutzfahrzeug (LNF) eine Auswerteinheit (AWE) aufweist, die aus den Daten der Satellitennavigations-Empfangseinheit (GPS) die absolute Position (Pb1, Pb2, ...) mindestens eines Referenzpunktes (b1, b2, ...) an dem Bearbeitungsgerät (B) im terrestrischen Bezugssystem bestimmt und wobei die Auswerteinheit (AWE) die absolute Position des Bearbeitungsgerätes (B) im terrestrischen Bezugssystem bestimmt und zumindest die absolute Position des Referenzpunktes (b1, b2) in einem historischen Datenkataster wieder abrufbar hinterlegt, wobei der Referenzpunkt (b1, b2) so in dem historischen Datenkataster abgelegt wird, dass zumindest ein landwirtschaftliches Nutzfahrzeug auf Basis des abgespeicherten Referenzpunktes (b1, b2) steuerbar ist.

2. Landwirtschaftliches Nutzfahrzeug nach Anspruch 1,
**dadurch gekennzeichnet,**
**daß** zur Bestimmung der absoluten Position (Pb1) mindestens eines Referenzpunktes (b1) mindestens eine Satellitenempfangseinheit (GPS) vorgesehen ist, deren Empfangsantenne an dem Referenzpunkt des Bearbeitungsgerätes (B) angebracht ist.

3. Landwirtschaftliches Nutzfahrzeug nach einem der Ansprüche 1 oder 2,
**dadurch gekennzeichnet,**
**daß** zur Bestimmung der Position (Pb1) mindestens eines Referenzpunktes (b1) eine Satellitenempfangseinheit (GPS) vorgesehen ist, deren Empfangsantenne an einem Punkt (Pf1) des Fahrzeug (F) angebracht ist, und mindestens ein Sensor (HS, QNS) vorgesehen ist, der die relative Lage des Bearbeitungsgerätes (B) am Fahrzeug (F) bestimmt.

4. Landwirtschaftliches Nutzfahrzeug nach einem der Ansprüche 1 bis 3,
**dadurch gekennzeichnet,**
**daß** dasselbe einen Höhensensor (HS) aufweist, der die relative Höhenlage des Bearbeitungsgerätes (B) zum Fahrzeug (F) ermittelt.

5. Landwirtschaftliches Nutzfahrzeug nach einem der Ansprüche 1 bis 4,
**dadurch gekennzeichnet,**
**daß** dasselbe einen Querneigungssenor (QNS) aufweist, der die relative Querneigung des Bearbeitungsgerätes (B) zum Fahrzeug (F) ermittelt.

6. Landwirtschaftliches Nutzfahrzeug nach einem der Ansprüche 4 oder 5,
**dadurch gekennzeichnet,**
**daß** die Auswerteeinheit (AWE) aus dem Höhensensor-Signal und/oder aus dem Querneigungssensors-Signal die mittels Satellitennavigation ermittelte absolute Postion eines Punktes (Pf1) am Fahrzeug (F) auf mindestens einen Referenzpunkt (Pb1) am verstellbaren Bearbeitungsgerät (B) zur Bestimmung dessen absoluter Position transformiert.

7. Landwirtschaftliches Nutzfahrzeug nach einem oder mehreren der Ansprüche 1 bis 6,
**dadurch gekennzeichnet,**
**daß** das landwirtschaftliche Nutzfahrzeug (LNF) eine Auswerteeinheit (AWE) aufweist, die, unter Verwendung der absoluten Position (Pb1) des Referenzpunktes (b1) und eines weiteren Punktes oder Vektors, eine für den Einsatzzweck des Bearbeitungsgerätes (B) charakteristische Bezugslinie (L1) im terrestrischen Bezugssystem bestimmt.

8. Landwirtschaftliches Nutzfahrzeug nach Anspruch 7,
**dadurch gekennzeichnet,**
**daß** die Bezugslinie (L1) durch den Referenzpunkt (b1) und die Richtung des Geschwindigkeitsvektors (vb1) des Referenzpunktes (b1) gegeben ist.

9. Landwirtschaftliches Nutzfahrzeug nach Anspruch 7 oder 8,
**dadurch gekennzeichnet,**
**daß** die Bezugslinie (L1) in der Regelelektronik einer automatischen Lenkeinrichtung als Lenksignal weiterverabeitet wird.

10. Landwirtschaftliches Nutzfahrzeug nach einem oder mehreren der Ansprüche 1 bis 9,
**dadurch gekennzeichnet,**
**daß** das landwirtschaftliche Nutzfahrzeug (LNF) eine Auswerteeinheit (AWE) aufweist, die eine weitere für den Einsatzzweck des Bearbeitungsgerätes charakteristische Bezugslinie (L2) durch den Referenzpunkt (b1) und einen weiteren Punkt oder Vektor vorzugsweise quer zur bevorzugten Fahrtrichtung und somit annähernd senkrecht zu der ersten Bezugslinie (L1) bestimmt.

11. Landwirtschaftliches Nutzfahrzeug nach einem der Ansprüche 7 bis 10,
**dadurch gekennzeichnet,**
**daß** diese Bezugslinie (L2) durch den Referenzpunkt (b1) und einen zweiten Referenzpunkt (b2) gegeben ist.

12. Landwirtschaftliches Nutzfahrzeug nach Anspruch 10 oder 11,
**dadurch gekennzeichnet,**
**daß** diese Bezugslinie (L2) zur Bestimmung der Querneigung des Erdbodens und/oder zur Regelung des Bodenabstands und der Querneigung des Bearbeitungsgerätes (B) benutzt wird.

13. Landwirtschaftliches Nutzfahrzeug nach einem oder mehreren der Ansprüche 10 bis 12,
**dadurch gekennzeichnet,**
**daß** sich die beiden Referenzpunkte (b1, b2) in Ruhelage im gleichen Abstand (d) über dem Erdboden befinden und die Neigung der Bezugslinie (L2) der Schräge des Erdbodens (quer zur bevorzugten Fahrtrichtung) entspricht.

14. Landwirtschaftliches Nutzfahrzeug nach einem oder mehreren der Ansprüche 1 bis 13,
**dadurch gekennzeichnet,**
**daß** Mittel (AS1, AS2) vorgesehen sind den Abstand vom Erdboden von mindestens einem der Referenzpunkte (Pb1) und/oder der Bezuglinie (L1 und/oder L2) zu ermitteln.

15. Landwirtschaftliches Nutzfahrzeug nach einem oder mehreren der Ansprüche 1 bis 14,
**dadurch gekennzeichnet,**
**daß** die Auswerteeinheit aus dem Abstand und der Querneigung des Bearbeitungsgerätes (B) die Querneigung des Erdbodens bestimmt, diese bei Positionsänderungen des Arbeitsfahrzeuges laufend aufzeichnet und damit ein dreidimensionales Geländeprofil berechnet.

16. Landwirtschaftliches Nutzfahrzeug nach einem oder mehreren der Ansprüche 1 bis 15,
**dadurch gekennzeichnet,**
**daß** die Richtung des Geschwindigkeitsvektors (vb1) des Referenzpunktes (b1) den GPS-Daten entnommen, aus zwei zeitlich aufeinanderfolgenden absoluten Positionen des Referenzpunktes (b1) und/oder aus sonstiger Sensorik zur Ermittlung der Geschwindigkeit ermittelt wird.

17. Landwirtschaftliches Nutzfahrzeug nach einem der vorstehenden Ansprüche 1 bis 15,
**dadurch gekennzeichnet,**
**daß** die Richtung des Geschwindigkeitsvektors (vP1) aus der relativen Position und der relativen Geschwindigkeit des Referenzpunktes (P1) zum Bezugspunkt (Pf1) am Arbeitsfahrzeug und der absoluten Position und Geschwindigkeit (vf1) des Punktes (Pf1) errechnet wird.

18. Landwirtschaftliches Nutzfahrzeug nach einem oder mehreren der Ansprüche 1 bis 17,
**dadurch gekennzeichnet,**
**daß** die verwendeten Satellitenempfangsgeräte P-DGPS und/oder den Empfang von erdgebundenen Pseudosatelliten unterstützen.

19. Landwirtschaftliches Nutzfahrzeug nach einem oder mehreren der Ansprüche 1 bis 18,
**dadurch gekennzeichnet,**
**daß** zusätzlich Koppelnavigation, beispielsweise über einen Kreiselkompaß, durchgeführt wird.

20. Landwirtschaftliches Nutzfahrzeug nach einem oder mehreren der Ansprüche 1 bis 19,
**dadurch gekennzeichnet,**
**daß** bei Positionsänderungen des Bearbeitungsgerätes das Gefälle bzw. die Steigung und/oder das Quergefälle mit der Position (Pb1, Pb2, ...) mindestens eines der Referenzpunkte ((b1, b2, ...) verknüpft abgespeichert wird.

21. Landwirtschaftliches Nutzfahrzeug nach einem oder mehreren der Ansprüche 1 bis 20,
**dadurch gekennzeichnet,**
**daß** das verstellbar angeordnete Bearbeitungsgerät (B) anhand der von der Auswerteeinheit (AWE) ermittelten Werte aktuell ausschließlich anhand der ermittelten Positionsdaten, in Verknüpfung mit einem historischen Datenkataster und/oder weiteren maschinenseitigen Sensoren steuerbar ist.

## Claims

1. An agricultural utility vehicle (LNF) comprising a processing implement (B) arranged displaceably in respect of its position and/or orientation with respect to the vehicle (F), wherein the utility vehicle has a satellite navigation receiving unit (GPS), **characterised in that** the agricultural utility vehicle (LNF) has an evaluation unit (AWE) which from the data from the satellite navigation receiving unit (GPS) determines the absolute position (Pb1, Pb2, ...) of at least one reference point (b1, b2, ...) on the processing implement (B) in the terrestrial reference system and wherein the evaluation unit (AWE) determines the absolute position of the processing implement (B) in the terrestrial reference system and stores at least the absolute position of the reference point (b1, b2) in a historical data registry in such a way that it can be called up again, wherein the reference point (b1, b2) is so stored in the historical data registry that at least one agricultural utility vehicle is controllable on the basis of the stored reference point (b1, b2).

2. An agricultural utility vehicle according to claim 1 **characterised in that** there is provided at least one satellite receiving unit (GPS) for determining the absolute position (Pb1) of at least one reference point (b1), the receiving antenna of the satellite receiving unit being mounted to the reference point of the processing implement (B).

3. An agricultural utility vehicle according to one of claims 1 and 2 **characterised in that** there is provided a satellite receiving unit (GPS) for determining the position (Pb1) of at least one reference point (b1), the receiving antenna of the satellite receiving unit being mounted to a point (Pfl) of the vehicle (F), and there is provided at least one sensor (HS, QNS) which determines the relative position of the processing implement (B) on the vehicle (F).

4. An agricultural utility vehicle according to one of claims 1 to 3 **characterised in that** same has a height sensor (HS) which ascertains the relative heightwise position of the processing implement (B) relative to the vehicle (F).

5. An agricultural utility vehicle according to one of claims 1 to 4 **characterised in that** same has a transverse inclination sensor (QNS) which ascertains the relative transverse inclination of the processing implement (B) relative to the vehicle (F).

6. An agricultural utility vehicle according to one of claims 4 and 5 **characterised in that** the evaluation unit (AWE) transforms from the height sensor signal and/or from the transverse inclination sensor signal the absolute position, ascertained by means of satellite navigation, of a point (Pfl) on the vehicle (F), to at least one reference point (Pb1) on the displaceable processing implement (B) for determining the absolute position thereof.

7. An agricultural utility vehicle according to one or more of claims 1 to 6 **characterised in that** the agricultural utility vehicle (LNF) has an evaluation unit (AWE) which, using the absolute position (Pb1) of the reference point (b1) and a further point or vector, determines a reference line (L1) which is characteristic for the purpose of use of the processing implement (B), in the terrestrial reference system.

8. An agricultural utility vehicle according to claim 7 **characterised in that** the reference line (L1) is given by the reference point (b1) and the direction of the speed vector (vb1) of the reference point (b1).

9. An agricultural utility vehicle according to claim 7 or claim 8 **characterised in that** the reference line (L1) is subjected to further processing in the electronic regulating system of an automatic steering arrangement as a steering signal.

10. An agricultural utility vehicle according to one or more of claims 1 to 9 **characterised in that** the agricultural utility vehicle (LNF) has an evaluation unit (AWE) which determines a further reference line (L2) which is characteristic for the purpose of use of the processing implement through the reference point (b1) and a further point or vector preferably transversely with respect to the preferred direction of travel and thus approximately perpendicularly to the first reference line (L1).

11. An agricultural utility vehicle according to one of claims 7 to 10 **characterised in that** said reference line (L2) is given by the reference point (b1) and a second reference point (b2).

12. An agricultural utility vehicle according to claim 10 or claim 11 **characterised in that** said reference line (L2) is used to determine the transverse inclination of the ground and/or to regulate the ground clearance and the transverse inclination of the processing implement (B).

13. An agricultural utility vehicle according to one or more of claims 10 to 12 **characterised in that** in the rest position the two reference points (b1, b2) are at the same spacing (d) above the ground and the inclination of the reference line (L2) corresponds to the slope of the ground (transversely with respect to the preferred direction of travel).

14. An agricultural utility vehicle according to one or more of claims 1 to 13 **characterised in that** there are provided means (AS1, AS2) for ascertaining the spacing from the ground of at least one of the reference points (Pb1) and/or the reference line (L1 and/or L2).

15. An agricultural utility vehicle according to one or more of claims 1 to 14 **characterised in that** the evaluation unit determines the transverse inclination of the ground from the clearance and the transverse inclination of the processing implement (B), continuously records same upon changes in the position of the working vehicle, and thus calculates a three-dimensional profile of the terrain.

16. An agricultural utility vehicle according to one or more of claims 1 to 15 **characterised in that** the direction of the speed vector (vb1) of the reference point (b1), taken from the GPS data, is ascertained from two absolute positions which occur in succession in respect of time of the reference point (b1) and/or from other sensor means for ascertaining speed.

17. An agricultural utility vehicle according to one of claims 1 to 15 **characterised in that** the direction of the speed vector (vP1) is calculated from the relative position and the relative speed of the reference point (P1) with respect to the reference point (Pfl) on the working vehicle and the absolute position and speed (vf1) of the point (Pfl).

18. An agricultural utility vehicle according to one or more of claims 1 to 17 **characterised in that** the satellite receiving units employed support P-DGPS and/or the reception of earth-bound pseudo-satellites.

19. An agricultural utility vehicle according to one or more of claims 1 to 18 **characterised in that** dead reckoning navigation, for example by way of a gyro compass, is additionally effected.

20. An agricultural utility vehicle according to one or more of claims 1 to 19 **characterised in that** upon changes in position of the processing implement the fall or rise and/or transverse fall is stored linked to the position (Pb1, Pb2, ...) of at least one of the reference points (b1, b2, ...).

21. An agricultural utility vehicle according to one or more of claims 1 to 20 **characterised in that** the displaceably arranged processing implement (B) is controllable on the basis of the values ascertained by the evaluation unit (AWE) currently exclusively on the basis of the ascertained position data, in conjunction with a historical data registry and/or further sensors at the machine side.

## Revendications

1. Véhicule utilitaire agricole (LNF) comprenant un outil de travail (B) monté de façon réglable en position et/ou en orientation par rapport au véhicule (F), le véhicule utilitaire présentant une unité de réception de navigation par satellites (GPS), **caractérisé par le fait que** le véhicule utilitaire agricole (LNF) présente une unité d'exploitation (AWE) qui détermine, à partir des données de l'unité de réception de navigation par satellites (GPS), la position absolue (Pb 1, Pb2, ... ) d'au moins un point de référence (b1, b2, ... ) sur l'outil de travail dans le système de référence terrestre, l'unité d'exploitation (AWE) déterminant la position absolue de l'outil de travail (B) dans le système de référence terrestre et mémorisant avec possibilité d'interrogation au moins la position absolue du point de référence (b1, b2) dans un cadastre de données historique, le point de référence (b1, b2) étant mémorisé dans le cadastre de données historique de manière telle qu'au moins un véhicule utilitaire agricole puisse être piloté sur la base du point de référence (b1, b2) mémorisé.

2. Véhicule utilitaire agricole suivant le revendication 1, **caractérisé par le fait que** pour la détermination de la position absolue (Pb 1) d'au moins un point de référence (b1), il est prévu au moins une unité de réception de navigation par satellites (GPS) dont l'antenne de réception est disposée au point de référence de l'outil de travail (B).

3. Véhicule utilitaire agricole suivant l'une des revendications 1 ou 2, **caractérisé par le fait que** pour la détermination de la position (Pb 1) d'au moins un point de référence (b 1), il est prévu une unité de réception de navigation par satellites (GPS) dont l'antenne de réception est disposée en un point (Pf1) du véhicule (F), et il est prévu au moins un capteur (HS, QNS) qui détermine la position relative de l'outil de travail (B) sur le véhicule (F).

4. Véhicule utilitaire agricole suivant l'une des revendications 1 à 3, **caractérisé par le fait qu'**il comprend un capteur de hauteur (HS) qui détermine la position relative en hauteur de l'outil de travail (B) par rapport au véhicule (F).

5. Véhicule utilitaire agricole suivant l'une des revendications 1 à 4, **caractérisé par le fait qu'**il comprend un capteur d'inclinaison transversale (QNS) qui détermine l'inclinaison transversale relative de l'outil de travail (B) par rapport au véhicule (F).

6. Véhicule utilitaire agricole suivant l'une des revendications 4 ou 5,**caractérisé par le fait que** l'unité d'exploitation (AWE), à partir du signal du capteur de hauteur et/du signal du capteur d'inclinaison transversale, transforme la position absolue d'un point (Pf1) sur le véhicule (F), déterminée par navigation par satellites, en au moins un point de référence (Pb1) sur l'outil de travail (B) réglable en vue de la détermination de la position absolue de ce point.

7. Véhicule utilitaire agricole suivant une ou plusieurs des revendications 1 à 6, **caractérisé par le fait que** le véhicule utilitaire agricole (LNF) présente une unité d'exploitation (AWE) qui, par utilisation de la position absolue (Pb1) du point de référence (b1) et d'un autre point ou vecteur, détermine dans le système de référence terrestre une ligne de référence (L1) caractéristique pour la fonction de l'outil de travail (B).

8. Véhicule utilitaire agricole suivant la revendication 7, **caractérisé par le fait que** la ligne de référence (L1) est donnée par le point de référence (b1) et la direction du vecteur de vitesse (vb1) du point de référence (b1).

9. Véhicule utilitaire agricole suivant le revendication 7 ou 8, **caractérisé par le fait que** la ligne de référence (L1) est traitée en tant que signal de guidage dans l'électronique de régulation d'un dispositif automatique de guidage.

10. Véhicule utilitaire agricole suivant une ou plusieurs des revendications 1 à 6, **caractérisé par le fait que** le véhicule utilitaire agricole (LNF) présente une unité d'exploitation (AWE) qui détermine une ligne de référence supplémentaire (L2) caractéristique pour la fonction de l'outil de travail (B) par le point de référence (b1) et un point ou vecteur supplémentaire de préférence transversalement à la direction de marche préférée et donc sensiblement perpendiculairement à la première ligne de référence (L1).

11. Véhicule utilitaire agricole suivant l'une des revendications 7 à 10, **caractérisé par le fait que** cette ligne de référence (L2) est donnée par le point de référence (b1) et un deuxième point de référence (b2).

12. Véhicule utilitaire agricole suivant la revendication 10 ou 11, **caractérisé par le fait que** cette ligne de référence (L2) est utilisée pour déterminer l'inclinaison transversale du sol et/ou pour la régulation de la distance au sol et de l'inclinaison transversale de l'outil de travail (B).

13. Véhicule utilitaire agricole suivant une ou plusieurs des revendications 10 à 12, **caractérisé par le fait que** les deux points de référence (b1, b2) se trouvent en position de repos à la même distance (d) au-dessus du sol et l'inclinaison de la ligne de référence (L2) correspond à l'inclinaison du sol (transversalement à la direction de marche préférée).

14. Véhicule utilitaire agricole suivant une ou plusieurs des revendications 1 à 13, **caractérisé par le fait que** des moyens (AS1, AS2) sont prévus pour déterminer la distance par rapport au sol d'au moins l'un des points de référence (Pb1) et/ou de la ligne de référence (L1 et/ou L2).

15. Véhicule utilitaire agricole suivant une ou plusieurs des revendications 1 à 14, **caractérisé par le fait que** l'unité d'exploitation détermine à partir de la distance et de l'inclinaison transversale de l'outil de travail (B) l'inclinaison transversale du sol, enregistre cette dernière de façon continue en cas de changements de position du véhicule de travail et calcule ainsi un profil de terrain tridimensionnel. V

16. Véhicule utilitaire agricole suivant une ou plusieurs des revendications 1 à 15, **caractérisé par le fait que** la direction du vecteur de vitesse (vb1) du point de référence (b 1) est prélevée des données GPS, est déterminée à partir de deux positions absolues temporellement successives du point de référence (b1) et/ou à partir d'autres capteurs pour la détermination de la vitesse.

17. Véhicule utilitaire agricole suivant l'une des revendications précédentes 1 à 15, **caractérisé par le fait que** la direction du vecteur de vitesse (vP1) est calculée à partir de la position relative et de la vitesse relative du point de référence (P1) par rapport au point de référence (Pf1) sur le véhicule de travail et de la position absolue et de la vitesse (vfl) du point (Pf1).

18. Véhicule utilitaire agricole suivant une ou plusieurs des revendications 1 à 17, **caractérisé par le fait que** les unités de réception utilisées supportent le PDGPS et/ou la réception de pseudo-satellites au sol.

19. Véhicule utilitaire agricole suivant une ou plusieurs des revendications 1 à 18, **caractérisé par le fait qu'**on effectue en plus de la navigation à l'estime, par exemple par gyro-compas.

20. Véhicule utilitaire agricole suivant une ou plusieurs des revendications 1 à 19, **caractérisé par le fait que** lors de changements de position de l'outil de travail, la pente et/ou le dévers est enregistré en combinaison avec la position (Pb1, Pb2, ... ) d'au moins l'un des points de référence (b1, b2, ... ).

21. Véhicule utilitaire agricole suivant une ou plusieurs des revendications 1 à 20, **caractérisé par le fait que** l'outil de travail (B) monté de façon réglable peut être commandé sur la base des valeurs déterminées par l'unité d'exploitation (AWE) exclusivement à l'aide des données de position déterminées, en combinaison avec un registre historique (cadastre) de données et/ou d'autres capteurs côté machine.
